# EUROPÄISCHE PATENTANMELDUNG

(11) **EP 1 174 204 A1**
(43) Veröffentlichungstag der Anmeldung: **23.01.2002**
(21) Anmeldenummer: 01116938.0
(22) Anmeldetag: 11.07.2001
(51) Int. Cl.: B23B 31/40

(54) **Wechselteil für Werkstückspannvorrichtung und daran angepasste Werkstückspannvorrichtung**

(30) Priorität: 21.07.2000 DE 20012706 U
(71) Anmelder: LIEBHERR-VERZAHNTECHNIK GmbH, 87437 Kempten (DE)
(72) Erfinder: Adrian, Rolf, 87471 Durach (DE); Reidl, Horst, 76275 Ettlingen (DE)
(74) Vertreter: Klunker . Schmitt-Nilson . Hirsch

(57) **Zusammenfassung**

Eine Werkstückspannvorrichtung (20) für Verzahnmaschinen und ein Wechselteil (10) für diese Werkstückspannvorrichtung (20) sind aneinander angepaßt. Ein Ende (11) des Wechselteils dient zur Fixierung an der Werkstückspannvorrichtung (20) und weist einerseits eine Stirnfläche (13) mit mindestens einer sich relativ zu einer Drehachse (14) in Umfangsrichtung erstreckenden Rampe (15) und ein Rastelement (16) auf, wobei das Rastelement (16) mit einem Rastelement (26) der Werkstückspannvorrichtung (20) so zusammenwirkt, daß ein Trennen des verrasteten Wechselteils (10) von der Werkstückspannvorrichtung (20) nur bei Überwinden einer Mindestkraft möglich ist. Die Werkstückspannvorrichtung (20) besitzt ihrerseits zusätzlich zu dem vorgenannten Rastelement (16) eine relativ zu einer Drehachse (14) zumindest in Teilbereichen zylindrisch ausgebildete Fläche (30) als radiale Anlagefläche für das Wechselteil (10) sowie eine Anschlagfläche oder mindestens einen radial herausragenden Anschlagstift (27), der mit der Rampe (15) des Wechselteils (10) axial zusammenwirkt.

## Beschreibung

Die vorliegende Erfindung betrifft ein Wechselteil für eine Werkstückspannvorrichtung, insbesondere von Verzahnmaschinen, sowie eine an das Wechselteil angepaßte Werkstückspannvorrichtung und ein System bestehend aus Wechselteil und Werkstückspannvorrichtung.

Werkstückspannvorrichtungen dienen dazu, ein zu bearbeitendes Werkstück in einer vorgegebenen Lage zu fixieren. Je höher die Anforderungen an die Bearbeitungsgenauigkeit sind, desto teurer sind solche Werkstückspannvorrichtungen. Dies gilt insbesondere für Werkstückspannvorrichtungen für Verzahnmaschinen. Deshalb wird in der Regel versucht, Werkstückspannvorrichtungen so zu konstruieren, daß damit mehrere unterschiedliche Werkstücke gespannt werden können. Dazu sind sogenannte Wechselteile erforderlich, die als Zwischenteil zwischen dem zu verspannenden Werkstück und der Werkstückspannvorrichtung eingesetzt werden. Ein erstes Ende eines solchen Wechselteils ist speziell zur Aufnahme eines spezifischen Werkstücktyps angepaßt und ein zweites Ende des Wechselteils dient zur Fixierung des Wechselteils an der Werkstückspannvorrichtung.

Üblicherweise werden diese Wechselteile mit der Werkstückspannvorrichtung mittels Schrauben fest verbunden. Eine zuverlässige Verbindung des Wechselteils mit der Werkstückspannvorrichtung ist aus funktionalen Gründen erforderlich, weil ansonsten aufgrund der Adhäsionswirkung des im Bearbeitungsprozeß verwendeten Kühlmittels die Gefahr besteht, daß das Wechselteil bei der Entnahme eines fertig bearbeiteten Werkstücks aus der Bearbeitungsmaschine an dem Werkstück haften bleibt. Die Schraubverbindung verursacht jedoch beim Umrüsten der Werkstückspannvorrichtung von einem Werkstücktyp auf einen anderen Werkstücktyp einen nicht unerheblichen Aufwand und entsprechend lange Umrüstzeiten durch das Lösen und Wiederanziehen der Schrauben. Die damit verbundenen Produktionsausfallzeiten sind kostenintensiv und daher unerwünscht.

Der vorliegenden Erfindung liegt die Aufgabe zugrunde, ein Wechselteil für eine Werkstückspannvorrichtung sowie eine an ein solches Wechselteil angepaßte Werkstückspannvorrichtung vorzuschlagen, die einerseits eine zuverlässige Verbindung zwischen Wechselteil und Werkstückspannvorrichtung und andererseits ein zügiges Auswechseln von Wechselteilen gewährleistet.

Die Erfindung bezieht sich auf zwei wesentliche Aspekte bzw. Elemente, die jeweils teilweise in dem Wechselteil und teilweise in der Werkstückspannvorrichtung realisiert sind und die so aneinander angepaßt sind, daß sie optimal zusammenwirken können. Konkret handelt es sich bei dem einen wesentlichen Aspekt um eine rastende Verbindung zwischen dem Wechselteil und der Werkstückspannvorrichtung, die sicherstellt, daß das Wechselteil, nachdem es eingerastet ist, mit der Werkstückspannvorrichtung fest verbunden ist. Bei dem anderen wesentlichen Aspekt handelt es sich um eine Kraftverstärkungseinrichtung zum Lösen des eingerasteten Wechselteils von der Werkstückspannvorrichtung für den Fall, daß ein Wechselteil gegen ein anderes Wechselteil ausgetauscht werden soll.

Die rastende Verbindung umfaßt zwei Rastelemente, das eine am Wechselteil und das andere an der Werkstückspannvorrichtung, die so zusammenwirken, daß ein Trennen des verrasteten Wechselteils von der Werkstückspannvorrichtung nur bei Überwindung einer Mindestkraft möglich ist. Konkret können die Rastelemente einerseits als Vertiefung oder Nut und andererseits als ein in die Vertiefung oder Nut eingreifendes, elastisch deformierbares Bauelement, wie beispielsweise ein federbelasteter Stift, ausgebildet sein. Dabei ist es unerheblich, ob die Vertiefung bzw. die Nut oder aber das elastisch deformierbare Bauelement am Wechselteil angebracht ist. Aus konstruktiven sowie Kostengründen ist es allerdings vorzuziehen, die einfach und platzsparend herstellbare Vertiefung oder Nut an den Wechselteilen vorzusehen und das demgegenüber aufwendigere und größere, elastisch deformierbare Bauelement in die Werkstückspannvorrichtung zu integrieren.

Die Kraftverstärkungseinrichtung ist an einer Stirnfläche des zur Fixierung an der Werkstückspannvorrichtung dienenden Endes des Wechselteils in Form von mindestens einer sich relativ zu einer Drehachse in Umfangsrichtung erstreckenden Rampe realisiert, wobei dieser Rampe gegenüberliegend an der Werkstückspannvorrichtung mindestens eine Anschlagfläche oder ein Anschlagstift angeordnet ist, um mit der Rampe des Wechselteils zusammenzuwirken. Im verrasteten Zustand liegt die Stirnfläche des Wechselteils an der Anschlagfläche bzw. dem Anschlagstift an oder ist dieser unmittelbar benachbart. Beim Verdrehen des verrasteten Wechselteils um die Drehachse wird dann über die schräge Rampenfläche eine in Richtung der Drehachse wirkende Axialkraft auf die Anschlagefläche bzw. den Anschlagestift der Werstückspannvorrichtung aufgebracht. Dies führt zu einer Verlagerung des Wechselteils in axialer Richtung relativ zur Werkstückspannvorrichtung, wobei die rastende Verbindung zwangsweise gelöst wird. Je flacher die Neigung der Rampe gewählt wird, desto größer ist zwar der Umdrehungswinkel, um den das Rastelement zum Lösen von der Werkstückspannvorrichtung gedreht werden muß, desto geringer ist aber auch die aufzubringende Kraft, die erforderlich ist, um die Vorspannkraft der rastenden Verbindung zu überwinden.

Vorzugsweise sind mehrere Rampen auf der Stirnfläche des Wechselteils konzentrisch um die Drehachse gleichmäßig verteilt und vorzugsweise sind ebenso viele Anschlagstifte gleichmäßig in Umfangsrichtung über der zylindrischen Fläche der Werkstückspannvorrichtung verteilt. Dadurch wird eine gleichmäßige Kraftverteilung relativ zur Drehachse sichergestellt und ein Verklemmen des Wechselteils auf der Werkstückspannvorrichtung beim Lösen der Verbindung vermieden. Die geringste Rampenneigung und dementsprechend der geringste erforderliche Kraftaufwand zum Lösen des Wechselteils von der Werkstückspannvorrichtung ergibt sich dann, wenn die gleichmäßig über die Stirnfläche des Wechselteils verteilten Rampen aneinandergrenzen und Kerben und Zacken bilden. Der Grund der Kerben liegt vorzugsweise geringfügig tiefer als der gedachte Schnittpunkt der angrenzenden Rampen, wodurch der Moment des Einrastens eindeutig spürbar wird.

Nachfolgend wird die Erfindung anhand der begleitenden Zeichnungen beispielhaft beschrieben. Darin zeigen:
Figur 1 eine Werkstückspannvorrichtung 20 mit eingerastetem Wechselteil 10 und einem zu bearbeitenden Werkstück 1,
Figur 2 ein Wechselteil 10 gemäß der vorliegenden Erfindung und
Figur 3 einen Ausschnitt des in Figur 2 dargestellten Wechselteils 10.

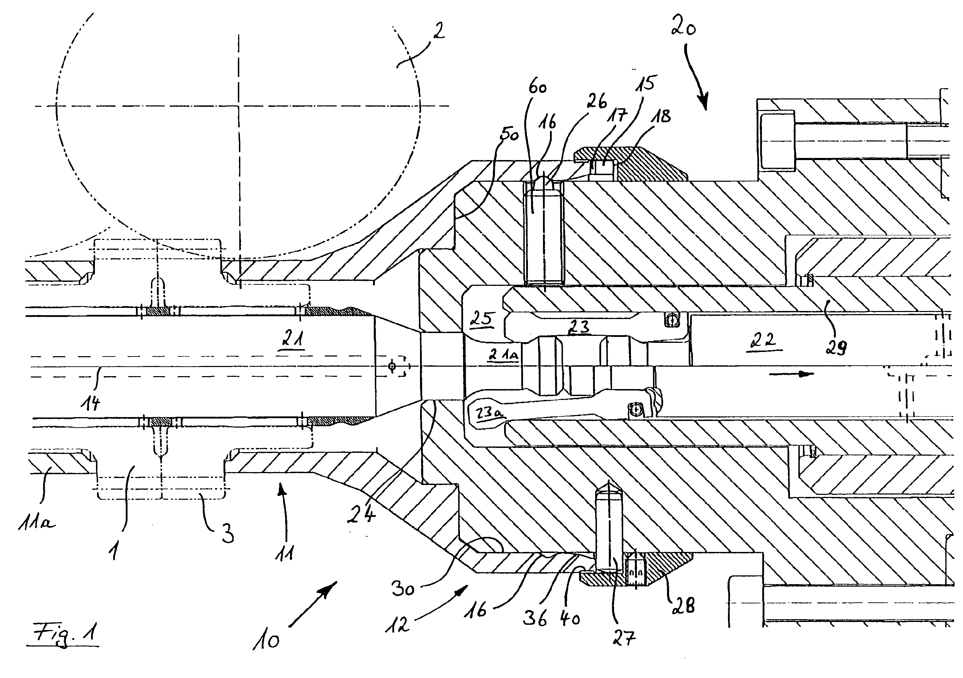

Figur 1 zeigt eine Werkstückspannvorrichtung 20 mit einem damit verbundenen Wechselteil 10 und einem mit dem Wechselteil 10 verspannten Werkstück 1. Desweiteren sind schematisch dargestellt ein Verzahnungswerkzeug 2, beispielsweise ein Zahnformfräser oder Wälzfräser, und eine mit dem Verzahnungswerkzeug 2 erzeugte Verzahnung 3 am Werkstück 1.

Die Verspannung des Werkstücks 1 und des Wechselteils 10 mit der Werkstückspannvorrichtung 20 wird folgendermaßen erreicht. Das Werkstück 1 sitzt auf einem zylindrischen Körper 21, dessen Ende 21a durch eine paßgenaue Öffnung 24 in einen Hohlraum 25 der Werkstückspannvorrichtung 20 eingeführt wird. Zu diesem Zeitpunkt sind die in Figur 1 dargestellte Zugstange 22 und die Klemmkeile 23 in ihrer linken bzw. offenen Position (untere Darstellung in Figur 1), in welcher die Klemmkeile 23 um ein geringfügiges Maß frei verschwenkbar sind. Diese Verschwenkbarkeit reicht aus, um das Ende 21a des zylindrischen Körpers 21 hinter die Klemmkeilenden 23a zu schieben. Die Zugstange 22 wird sodann in ihre Verriegelungsposition verschoben (obere Darstellung in Figur 1), im in Figur 1 dargestellten Falle also in Pfeilrichtung nach rechts. Dadurch verklemmen sich die Klemmkeilenden 23a der Klemmkeile 23 zwischen einer inneren Oberfläche einer Buchse 24 und einer Hinterschneidung des freien Endes 21a des zylindrischen Körpers 21. Dadurch wird zunächst einmal erreicht, daß das Werkstück 1 rotations-symmetrisch zur Achse 14 angeordnet ist.

Beim Verschieben der Zugstange 22 in ihre Verriegelungsposition wird das Werkstück 1 gleichzeitig in axialer Richtung zwischen dem linken Ende 11 des Wechselteils 10 und einer werkstückspezifischen Spannhülse 11a verspannt, wobei die Spannhülse 11a fest mit dem zylindrischen Körper 21 verbunden ist (in Figur 1 nicht dargestellt), beispielsweise in derselben Weise wie das Wechselteil 10 mit der Werkstückspannvorrichtung 20 verbunden ist. Das Verschieben der Zug- stange 22 nach rechts (Pfeilrichtung) hat dann zur Folge, daß der zylindrische Körper 21 mittels der Klemmkeile 23 ebenfalls nach rechts gezogen wird, wodurch die Spannhülse 11a eine nach rechts wirkende Kraft auf das Werkstück 1 ausübt, welches an das linke Ende 11 des Wechselteils 10 zur Anlage kommt und dadurch das Wechselteil 10 gegen eine Stirnfläche 50 der Werkstückspannvorrichtung 20 drückt. In diesem Zustand ist das Werkstück 1 somit zuverlässig und positionsgenau verspannt, ohne daß weitere Maßnahmen notwendig wären.

Das Werkstück wird dann nach seiner Bearbeitung aus der Einspannung gelöst, indem die Zugstange 22 entgegen der Pfeilrichtung bewegt wird, bis sie gegen das freie Ende 21a des zylindrischen Körpers 21 anstößt. Der zylindrische Körper 21 mit dem darauf angeordneten Werkstück 1 löst sich dabei von dem Auflagering des Wechselteils 10, und das bearbeitete Werkstück 1 kann der Bearbeitungsmaschine entnommen werden.

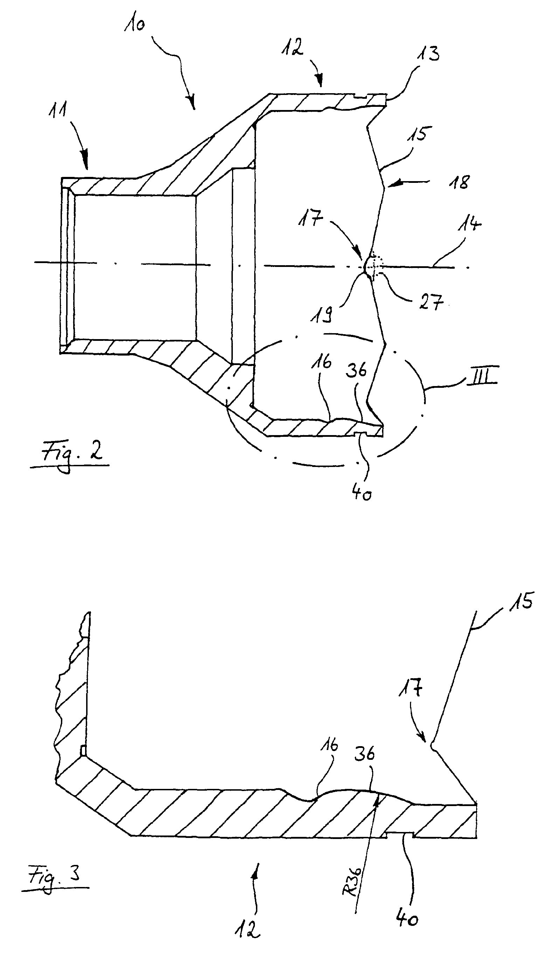

Normalerweise wirken zwischen dem Werkstück 1 und dem Wechselteil 10 erhebliche Adhäsionskräfte, die durch das während des Bearbeitungsvorgangs eingesetzte Kühlmittel hervorgerufen werden. Um nun zu verhindern, daß das Wechselteil 10 beim Lösen des zylindrischen Körpers 21 am Werkstück 1 haften bleibt, ist eine rastende Verbindung 16, 26 zwischen dem Wechselteil 10 und der Werkstückspannvorrichtung 20 vorgesehen. Konkret weist das Wechselteil 10 eine Vertiefung 16 auf, die aus fertigungstechnischen Gründen vorzugsweise als um die Drehachse 14 umlaufende Nut in dem Ende 12 des Wechselteils 10 ausgebildet ist. Dies ist in den Figuren 2 und 3 separat und vergrößert dargestellt. In diese Nut 16 greift ein Stift 26 ein, der wiederum in einem mit der Werkstückspannvorrichtung 20 verschraubten Körper 60 gehalten und durch eine in dem Körper 60 aufgenommene Vorspannfeder (nicht dargestellt) in die Vertiefung bzw. Nut 16 gedrängt wird.

Eine Anlauffläche 36 ist zwischen der Stirnfläche 13 und der Vertiefung bzw. Nut 16 mit geringer radialer Neigung vorgesehen (Figur 3), an der der Kopf des federbelasteten Stifts 16 entlangläuft, wenn das Wechselteil 10 auf die Werkstückspannvorrichtung 20 aufgeschoben wird. Der aus der Werkstückspannvorrichtung herausragende federbelastete Stift 16 wird dabei ohne besonderen Kraftaufwand entgegen der Federkraft heruntergedrückt, bis er in die Vertiefung bzw. Nut 16 einrastet. Die Anlauffläche 36 ist vorzugsweise konvex gekrümmt und weist einen Radius R36 auf, der etwa der Hälfte des Abstandes zwischen Anlauffläche 36 und Drehachse 14 beträgt, z.B. 30 mm.

Die rastende Verbindung 16, 26 verhindert eine axiale Verlagerung des Wechselteils 10 relativ zur Werkstückspannvorrichtung 20, solange eine in Axialrichtung wirkende Mindestkraft nicht überschritten wird. Beim Auswechseln des Wechselteils 10 gegen ein anderes Wechselteil muß nun diese Mindestaxialkraft aufgewendet werden. Dies geschieht durch Drehen des Wechselteils 10 um die Drehachse 14. Um ein Drehen des Wechselteils 10 zu ermöglichen, sitzt das Wechselteil 10 auf einer ebenfalls (zumindest in Teilbereichen) zylindrischen Fläche 30 der Werkstückspannvorrichtung 20 auf. Beim Drehen des Wechselteils 10 bewegt sich die rampenförmig (15) ausgebildete Stirnfläche 13 des Endes 12 des Wechselteils 10 an einem oder mehreren Anschlagstiften 27 entlang. Die Anschlagstifte 27 sind ortsfest und ragen radial aus der Werkstückspannvorrichtung 20 heraus, so daß die Drehung des Wechselteils 10 zwangsläufig eine axiale Verschiebung des Wechselteils 10, in dem in Figur 1 dargestellten Fall nach links, zur Folge hat. Dies ist anhand der Figur 2 einfach nachzuvollziehen. Eine Drehung des Wechselteils 10 um die Drehachse 14 bewirkt bei ortsfestem Anschlagstift 27 eine Verlagerung des Wechselteils 10 weg von dem Anschlagstift 27, das heißt in dem dargestellten Ausführungsbeispiel nach links.

Die Rampen 15 sind gleichmäßig über die Stirnfläche 13 des Wechselteils 10 verteilt und grenzen aneinander, so daß sie Kerben 17 und Zakken 18 bilden (Fig. 2). Dadurch ist es unerheblich, in welcher Winkelposition das Wechselteil 10 auf die Werkstückspannvorrichtung 20 aufgeschoben wird. Vorzugsweise sind auch mehrere Anschlagstifte 27 gleichmäßig über den Umfang der zylindrischen Fläche 30 der Werkstückspannvorrichtung 20 verteilt, damit die beim Lösen des Wechselteils 10 von der Werkstückspannvorrichtung 20 erzeugten axialen Kräfte gleichmäßig auf die Stirnfläche 13 übertragen werden.

Der Kerbgrund 19 der Kerben 17 zwischen zwei aufeinander zulaufenden Rampen 15 liegt geringfügig tiefer als der gedachte Schnittpunkt dieser beiden Rampen 15 und ist als Kreissegment ausgebildet, dessen Radius dem Radius des Anschlagstifts 27 entspricht. Dadurch wird der Moment des Einrastens der rastenden Verbindung 16, 26 im letzten Moment etwas beschleunigt und dadurch eindeutig spürbar.

Schließlich ist noch eine Markierung 40 an der Außenseite des Endes 12 des Wechselteils 10 angebracht, die im gelösten Zustand des Wechselteils 10 sichtbar ist, die aber im verrasteten Zustand des Wechselteils 10 von einer Hülse 28 abgedeckt wird. Die Markierung 40 ist als Sicherheitsmarkierung rot lackiert. Ist diese rote Markierung sichtbar, so gilt dies als Hinweis dafür, daß das Wechselteil 10 nicht ordnungsgemäß mit der Werkstückspannvorrichtung 20 verrastet ist.

## Patentansprüche

1. Wechselteil (10) für eine Werkstückspannvorrichtung (20), insbesondere von Verzahnmaschinen, umfassend ein erstes Ende (11) zur Aufnahme eines daran angepaßten Werkstücktyps und ein zweites Ende (12) zur Fixierung des Wechselteils (10) an einer Werkstückspannvorrichtung (20), **dadurch gekennzeichnet, daß** das zweite Ende (12)
- eine Stirnfläche (13) aufweist, die mindestens eine sich relativ zu einer Drehachse (14) in Umfangsrichtung erstreckende Rampe (15) besitzt, und
- ein Rastelement (16) aufweist, das angepaßt ist, um mit einem Rastelement (26) einer Werkstückspannvorrichtung (20) so zusammenzuwirken, daß ein Trennen des verrasteten Wechselteils (10) von der Werkstückspannvorrichtung (20) nur bei Überwindung einer Mindestkraft möglich ist.

2. Wechselteil nach Anspruch 1, wobei das Rastelement (16) als Vertiefung in dem Wechselteil (10) ausgebildet ist.

3. Wechselteil nach Anspruch 2, wobei die Vertiefung (16) als eine sich in Umfangsrichtung zur Drehachse (14) erstreckende Nut ausgebildet ist.

4. Wechselteil nach Anspruch 2 oder 3, wobei zwischen der Stirnfläche (13) und der Vertiefung (16) eine in Richtung der Drehachse (14) verlaufende Anlauffläche (36) mit geringer radialer Neigung vorgesehen ist.

5. Wechselteil nach Anspruch 4, wobei die Neigung der Anlauffläche (36) gekrümmt ist und der Krümmungsradius (R36) im Verhältnis zum Abstand der Anlauffläche (36) zur Drehachse (14) in etwa 1:2 beträgt.

6. Wechselteil nach Anspruch 1, wobei das Rastelement ein elastisch deformierbares Bauelement ist.

7. Wechselteil nach Anspruch 6, wobei das Rastelement ein federbelasteter Stift ist.

8. Wechselteil nach einem der Ansprüche 1 bis 7, wobei mehrere Rampen (15) auf der Stirnfläche (13) in Umfangsrichtung um die Drehachse (14) gleichmäßig verteilt sind.

9. Wechselteil nach Anspruch 8, wobei die Rampen (15) derart verteilt sind, daß sie aneinandergrenzen und jeweils sechs Kerben (17) und Zakken (18) bilden.

10. Wechselteil nach einem der Ansprüche 1 bis 9, wobei zwischen zwei aufeinander zulaufenden Rampen (15) eine Kerbe (17) ausgebildet ist, deren Kerbgrund (19) geringfügig tiefer liegt, als der gedachte Schnittpunkt der beiden Rampen (15).

11. Wechselteil nach Anspruch 10, wobei der Kerbgrund (19) eine Krümmung aufweist, die an den Radius eines Anschlagstifts (27) einer Werkstückspanneinrichtung (20) angepaßt ist.

12. Wechselteil nach einem der Ansprüche 1 bis 11, wobei in einem Bereich einer von außen sichtbaren Fläche des zweiten Endes (12) eine auffällige Markierung (40) so angebracht ist, daß die Markierung im verrasteten Zustand von einem Element (28) einer Werkstückspanneinrichtung (20) abdeckbar ist.

13. Werkstückspannvorrichtung (20), die zur Verwendung mit einem Wechselteil (10) nach einem der Ansprüche 1 bis 12 angepaßt ist, umfassend:
- eine relativ zu einer Drehachse (14) zumindest in Teilbereichen zylindrisch ausgebildete Fläche (30) als radiale Anlagefläche für ein Wechselteil (10),
- mindestens eine Anschlagfläche oder mindestens einen Anschlagstift (27), der aus der Werkstückspannvorrichtung (20) im wesentlichen radial relativ zur Drehachse (14) herausragt und dazu dient, mit mindestens einer Rampe (15) eines Wechselteils (10) in axialer Richtung relativ zur Drehachse (14) zusammenzuwirken, und
- ein Rastelement (26), das angepaßt ist, mit einem Rastelement (16) eines Wechselteils (10) so zusammenzuwirken, daß ein Trennen des verrasteten Wechselteils (10) von der Werkstückspannvorrichtung (20) nur bei Überwindung einer Mindestkraft möglich ist.

14. Werkstückspannvorrichtung nach Anspruch 13, wobei das Rastelement (26) ein elastisch deformierbares Bauelement ist.

15. Werkstückspannvorrichtung nach Anspruch 14, wobei das Rastelement (26) ein federbelasteter Stift ist.

16. Werkstückspannvorrichtung nach Anspruch 13, wobei das Rastelement als Vertiefung ausgebildet ist.

17. Werkstückspannvorrichtung nach Anspruch 16, wobei die Vertiefung als eine sich in Umfangsrichtung zur Drehachse (14) erstreckende Nut ausgebildet ist.

18. Werkstückspannvorrichtung nach Anspruch 16 oder 17, wobei die zylindrische Fläche (30) an ihrem wechselteilseitigen Ende eine in axialer Richtung relativ zur Drehachse (14) verlaufende Anlauffläche mit geringer radialer Neigung aufweist.

19. Werkstückspannvorrichtung nach Anspruch 18, wobei die Neigung der Anlauffläche (36) gekrümmt ist und der Krümmungsradius (R36) im Verhältnis zum Abstand der Anlauffläche (36) zur Drehachse (14) in etwa 1:2 beträgt.

20. Werkstückspannvorrichtung nach einem der Ansprüche 13 bis 19, wobei eine Hülse (28) vorgesehen ist, die angepaßt ist, um im mit einem Wechselteil (10) verrasteten Zustand einen ansonsten von außen sichtbaren Bereich (40) des Wechselteils (10) abzudecken.

21. Werkstückspannvorrichtung nach einem der Ansprüche 13 bis 20, wobei mehrere Anschlagstifte (27) gleichmäßig in Umfangsrichtung verteilt aus der zylindrischen Fläche (30) herausragen.

22. Werkstückspannvorrichtung nach Anspruch 21, wobei sechs Anschlagstifte (27) vorgesehen sind.

23. System bestehend aus einer Werkstückspannvorrichtung (20) nach einem der Ansprüche 13 bis 22 und einem Wechselteil (10) nach einem der Ansprüche 1 bis 13.
